(19) Europäisches Patentamt
European Patent Office
Office européen des brevets

(11) **EP 3 968 168 A1**

(12) **EUROPEAN PATENT APPLICATION**
published in accordance with Art. 153(4) EPC

(43) Date of publication:
**16.03.2022 Bulletin 2022/11**

(51) Int Cl.:
***G06F 13/40*** (2006.01)     ***G06F 13/42*** (2006.01)

(21) Application number: **20813045.0**

(22) Date of filing: **26.04.2020**

(86) International application number:
**PCT/CN2020/087077**

(87) International publication number:
**WO 2020/238522 (03.12.2020 Gazette 2020/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.05.2019 CN 201910468278**

(71) Applicant: **ZTE Corporation**
**Shenzhen, Guangdong 518057 (CN)**

(72) Inventors:
• **SHEN, Xing**
**Shenzhen, Guangdong 518057 (CN)**
• **ZHANG, Wei**
**Shenzhen, Guangdong 518057 (CN)**
• **CHENG, Jun**
**Shenzhen, Guangdong 518057 (CN)**
• **SHI, Sichao**
**Shenzhen, Guangdong 518057 (CN)**
• **MU, Fen**
**Shenzhen, Guangdong 518057 (CN)**
• **LI, Qiushi**
**Shenzhen, Guangdong 518057 (CN)**
• **ZHANG, Nanshan**
**Shenzhen, Guangdong 518057 (CN)**
• **CAO, Jie**
**Shenzhen, Guangdong 518057 (CN)**

(74) Representative: **Raynor, Simon Mark**
**Murgitroyd & Company Milton Keynes**
**Altius House**
**1 North Fourth Street**
**Milton Keynes MK9 1DG (GB)**

(54) **METHOD, APPARATUS, AND SYSTEM FOR ACQUIRING MODULE IDENTIFICATION**

(57) A method for obtaining a module identifier, a device and a system for the same are provided. The method includes obtaining (101), by a module, a signal including rack information and a signal including slot information from a single board to which the module is inserted and obtaining (102), by the module, identification information of the module by using the rack information and the slot information.

The module obtains a signal including rack information and a signal including slot information from a single board to which the module is inserted — 101

↓

The module obtains identification information of the module by using the rack information and the slot information — 102

FIG. 1

**EP 3 968 168 A1**

## Description

### CROSS REFERENCE TO RELATED APPLICATIONS

The present application claims priority to Chinese patent application No. 201910468278.4 filed May 31, 2019, which is incorporated by reference herein in its entirety.

### TECHNICAL FIELD

Embodiments of the present disclosure relate to the field of communication technology, in particular to a method, a device and a system for obtaining a module identifier.

### BACKGROUND

Modules in a power supply system are usually interconnected by serial communication bus for data interaction with each other, and communicate with a monitoring device through the bus to realize remote control, remote measurement and remote signaling for each module. The monitoring device identifies the modules through their identifiers when communicating with them.

In the related technology, the identifiers of the modules are obtained by burning and then reading slot address numbers, or by pulling up different address lines to obtain the slot address numbers, or by adding a dual in-line package (DIP) switch to generate corresponding address binary numbers representing the modules.

However, in these methods for obtaining the identifiers, the method of burning the slot address numbers requires burning operation which costs a great deal of labor; the method of pulling up different address lines relies on Peripheral Component Interconnect (PCI) parallel buses and requires system scanning, and thus is subject to the number of PCI parallel buses and has poor identification efficiency; the method of adding the DIP switch relies on the digit number of the DIP switch, the more the digits of the DIP switch, the more Input/Output (IO) pins of a digital controller are required for detecting the digits of the DIP switch, which results in a larger volume of the digital controller and a greatly increased cost for materials.

### SUMMARY

In order to solve the above technical problems, embodiments of the present disclosure provide a method for obtaining a module identifier, which conveniently and quickly achieves identification to modules inserted into a single board.

For this purpose, an embodiment of the present disclosure provides a method for obtaining a module identifier, including: obtaining, by a module, a signal including rack information and a signal including slot information from a single board to which the module is inserted; obtaining, by the module, identification information of the module by using the rack information and the slot information.

An embodiment of the present disclosure provides a method for obtaining a module identifier, including: generating, by a single board, a signal including rack information and a signal including slot information according to a rack and a slot in which a module inserted to the single board is located.

An embodiment of the present disclosure further provides a method for obtaining a module identifier, including: obtaining, by a monitoring device, rack information and slot information from a module; obtaining, by the monitoring device, identification information of the module according to the rack information and the slot information; sending, by the monitoring device, the identification information to the module.

An embodiment of the present disclosure further provides a module, which is inserted into a single board and includes a first obtaining unit and a first processing unit. The first obtaining unit is configured to obtain a signal including rack information and a signal including slot information from the single board to which the module is inserted. The first processing unit is configured to obtain identification information of the module by using the rack information and the slot information.

An embodiment of the present disclosure further provides a single board with a plurality of modules inserted thereto. The single board includes a second processing unit configured to generate a signal including rack information and a signal including slot information according to a rack and a slot in which each module inserted to the single board is located.

An embodiment of the present disclosure further provides a monitoring device including a second obtaining unit and a third processing unit. The second obtaining unit is configured to obtain rack information and slot information from a module. The third processing unit is configured to obtain identification information of the module according to the rack information and the slot information, and send the obtained identification information to the module.

An embodiment of the present disclosure further provides a system for obtaining a module identifier, including a board as described above and a plurality of modules as described above.

An embodiment of the present disclosure further provides a system for obtaining a module identifier, including a board as described above, a monitoring device as described above and a plurality of modules as described above.

Other features and advantages of the present disclosure will be described in the following specification, and partly become obvious from the specification, or understood by implementing the present disclosure. The purpose and other advantages of the present disclosure may be realized and obtained through a structure specifically pointed out in the specification, claims and drawings.

## BRIEF DESCRIPTION OF THE DRAWINGS

The accompanying drawings are used to provide a further understanding of the technical solution of the present disclosure, and constitute a part of the specification. Together with the embodiments of the present disclosure, the accompanying drawings are used to explain the technical solution of the present disclosure, and do not constitute a limitation to the technical solution of the present disclosure.

FIG. 1 is a flowchart of a method for obtaining a module identifier according to an embodiment of the present disclosure.
FIG. 2 is a flowchart of a method for obtaining a module identifier according to another embodiment of the present disclosure.
FIG. 3 is a flowchart of a method for obtaining a module identifier according to still another embodiment of the present disclosure.
FIG. 4 is a schematic structural diagram of a module according to an embodiment of the present disclosure.
FIG. 5 is a schematic structural diagram of a single board according to an embodiment of the present disclosure.
FIG. 6 is a schematic structural diagram of a monitoring device according to an embodiment of the present disclosure.
FIG. 7 is a schematic structural diagram of a system for obtaining a module identifier according to an embodiment of the present disclosure.
FIG. 8 is a schematic structural diagram of a system for obtaining a module identifier according to another embodiment of the present disclosure.
FIG. 9 is a schematic structural diagram of a system for obtaining a module identifier according to still another embodiment of the present disclosure.
FIG. 10 is a schematic structural diagram of a system for obtaining a module identifier according to still another embodiment of the present disclosure.
FIG. 11 is a schematic structural diagram of a circuit corresponding to a system for obtaining a module identifier according to an embodiment of the present disclosure.
FIG. 12 is a schematic structural diagram of a system for obtaining a module identifier according to still another embodiment of the present disclosure.
FIG. 13 is a schematic structural diagram of a system for obtaining a module identifier according to still another embodiment of the present disclosure.
FIG. 14 is a schematic structural diagram of a system for obtaining a module identifier according to still another embodiment of the present disclosure.
FIG. 15 is a schematic structural diagram of a system for obtaining a module identifier according to still another embodiment of the present disclosure.
FIG. 16 is a schematic structural diagram of a system for obtaining a module identifier according to still another embodiment of the present disclosure.

## DETAILED DESCRIPTION

In order to make the purpose, the technical solution, and the advantages of the present disclosure clearer, embodiments of the present disclosure will be described in detail below with reference to the accompanying drawings. It should be noted that the embodiments in the present disclosure and the features in the embodiments may be combined with each other arbitrarily in a condition without conflict.

The operations shown in the flowchart of the accompanying drawings may be performed in a computer system storing a set of computer-executable instructions. And, although a logical sequence is shown in the flowchart, in some cases, the operations shown or described may be performed in an order other than that described herein.

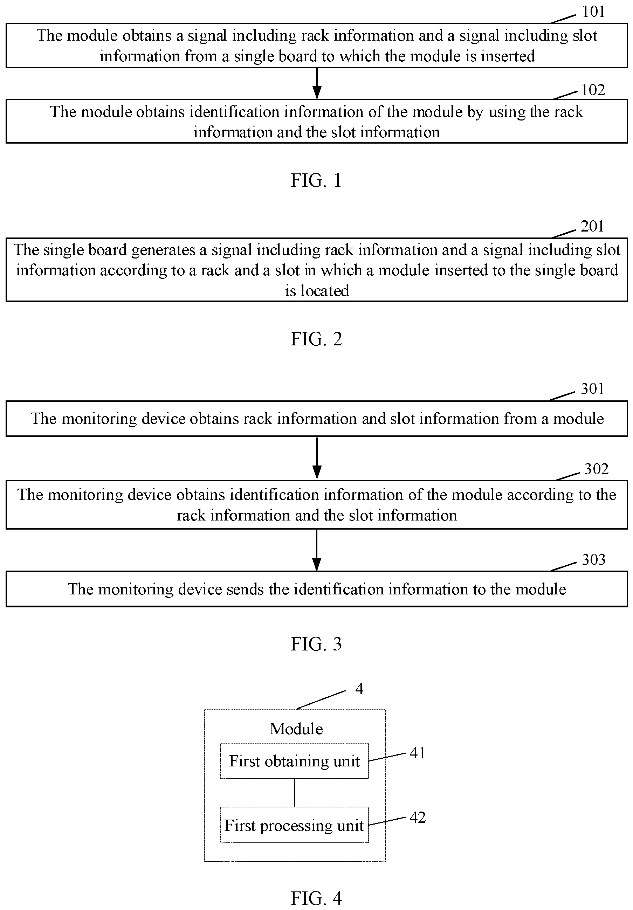

An embodiment of the present disclosure provides a method for obtaining a module identifier. As shown in FIG. 1, the method includes operations as follows.

In operation 101, a module obtains a signal including rack information and a signal including slot information from a single board to which the module is inserted.

In an exemplary example, the operation of the module obtaining the signal including the rack information and the signal including the slot information from the single board to which the module is inserted includes: the module obtains the signal including the rack information and the signal including the slot information through analog-to-digital conversion sampling from the single board to which the module is inserted; the module obtains the signal including the rack information and the signal including the slot information through a communication bus from the single board to which the module is inserted.

In operation 102, the module obtains identification information of the module by using the rack information and the slot information.

In an exemplary example, the operation of the module obtaining the identification information of the module by using the rack information and the slot information includes operations as follows.

In operation 102a, the module sends the rack information and the slot information to a monitoring device to enable the monitoring device to obtain the identification information of the module according to the rack information and the slot information.

In operation 102b, the module receives the identification information from the monitoring device.

In an exemplary example, the identification information includes an identification number, the rack information includes a voltage value of a rack where the module is located, and the slot information includes a voltage value of a slot at the rack and in which the module is located.

In an exemplary example, the operation of the module obtaining the identification information of the module by using the rack information and the slot information includes operations as follows.

In operation 102c, the module obtains a serial number of the rack where the module is located according to the voltage value of the rack, a voltage value of a power supply, and a total number of racks.

In operation 102d, the module obtains a serial number of the slot in which the module is located according to the voltage value of the slot, the voltage value of the power supply, and a total number of voltage dividing resistors.

In an exemplary example, the voltage value of the power supply is a voltage value of a power supply of a system in which the module is located, the total number of racks is a total number of racks included in the system in which the module is located, and the total number of the voltage dividing resistors is a total number of voltage dividing resistors included in the system in which the module is located. The system may be a power supply system. When the system is a power supply system, the module may be a rectifier module.

In operation 102e, the module obtains an identification number of the module according to the serial numbers of the rack and the slot, and the total number of the voltage dividing resistors.

In an exemplary example, the operation of the module obtaining the serial number of the rack where the module is located according to the voltage value of the rack, the voltage value of the power supply and the total number of the racks includes that the module obtains the serial number of the rack where the module is located through the voltage value of the rack divided by the voltage value of the power supply and further multiplied by the total number of the racks.

The operation of the module obtaining the serial number of the slot in which the module is located according to the voltage value of the slot, the voltage value of the power supply and the total number of the voltage dividing resistors includes that the module obtains the serial number of the slot in which the module is located through the voltage value of the slot divided by the voltage value of the power supply and further multiplied by the total number of the voltage dividing resistors.

The operation of the module obtaining the identification number of the module according to the serial numbers of the rack and the slot, and the total number of the voltage dividing resistors includes operations as follows.

The module obtains a first result value through the serial number of the rack minus 1;

The module obtains a second result value through the first result value multiplied by the total number of the voltage dividing resistors;

The module obtains the identification number of the module through the second result value plus the serial number of the slot.

In the method for obtaining a module identifier provided in the embodiment of the present disclosure, the module obtains the signal including the rack information and the signal including the slot information from the single board to which the module is inserted, and then obtains the identification information of the module by using the obtained two pieces of information, thereby conveniently and quickly achieving identification to the modules, with avoiding a series of problems such as costing a great deal of labor and materials, being subject to the number of PCI parallel buses and being of poor identification efficiency.

An embodiment of the present disclosure further provides a method for obtaining a module identifier. As shown in FIG. 2, the method includes an operation as follows.

In operation 201, a single board generates a signal including rack information and a signal including slot information according to a rack and a slot in which a module inserted to the single board is located.

In an exemplary example, the single board generates the signal including the rack information and the signal including the slot information according to the rack and the slot in which the module inserted to the single board is located, so as to enable the module to obtain the signal including the rack information and the signal including the slot information from the single board and obtain a module identifier according to the rack information and the slot information.

In an exemplary example, the operation of the single board generating the signal including the rack information and the signal including the slot information according to the rack and the slot in which the module inserted to the single board is located includes an operation as follows.

The single board generates the signal including the rack information and the signal including the slot information through a resistor divider network according to the rack and the slot in which the module inserted to the single board is located.

In an exemplary example, the operation of the single board generating the signal including the rack information and the signal including the slot information according to the rack and the slot in which the module inserted to the single board is located includes an operation as follows.

The single board generates the signal including the rack information through an external signal-generating device according to the rack in which the module inserted to the single board is located, and generates the signal including the slot information through a resistor divider network according to the slot in which the module inserted to the single board is located.

In an exemplary example, the external signal-generating device includes a controller area network (CAN) relay and a monitoring device.

In the method for obtaining a module identifier provided in the embodiment of the present disclosure, the single board generates the signal including the rack information and the signal including the slot information according to the rack and the slot in which the module inserted to the single board is located, so as to enable the module to obtain the signal including the rack information and the signal including the slot information and then obtain the identification information of the module according to the obtained two pieces of information, thereby conveniently and quickly achieving identification to the modules, with avoiding a series of problems such as costing a great deal of labor and materials, being subject to the number of PCI parallel buses and being of poor identification efficiency.

An embodiment of the present disclosure further provides a method for obtaining a module identifier. As shown in FIG. 3, the method includes operations as follows.

In operation 301, the monitoring device obtains rack information and slot information from a module.

In operation 302, the monitoring device obtains the identification information of the module according to the rack information and the slot information.

In an exemplary example, the identification information includes an identification number, the rack information includes a voltage value of a rack where the module is located, the slot information includes a voltage value of a slot at the rack and in which the module is located.

In an exemplary example, the operation of the monitoring device obtaining the identification information of the module according to the rack information and the slot information includes operations as follows.

In operation 302a, the monitoring device obtains a serial number of the rack where the module is located according to the voltage value of the rack, a voltage value of a power supply, and a total number of racks.

In operation 302b, the monitoring device obtains a serial number of the slot in which the module is located according to the voltage value of the slot, the voltage value of the power supply, and a total number of voltage dividing resistors.

In operation 302c, the monitoring device obtains an identification number of the module according to the serial numbers of the rack and the slot, and the total number of the voltage dividing resistors.

In an exemplary example, the operation of the monitoring device obtaining the serial number of the rack where the module is located according to the voltage value of the rack, the voltage value of the power supply, and the total number of the racks includes that the monitoring device obtains the serial number of the rack where the module is located through the voltage value of the rack divided by the voltage value of the power supply and further multiplied by the total number of the racks.

The operation of the monitoring device obtaining the serial number of the slot in which the module is located according to the voltage value of the slot, the voltage value of the power supply and the total number of the voltage dividing resistors includes that the monitoring device obtains the serial number of the slot in which the module is located through the voltage value of the slot divided by the voltage value of the power supply and further multiplied by the total number of the voltage dividing resistors.

The operation of the monitoring device obtaining the identification number of the module according to the serial numbers of the rack and the slot, and the total number of the voltage dividing resistors includes operations as follows.

The monitoring device obtains a third result value through the serial number of the rack minus 1.

The monitoring device obtains a fourth result value through the third result value multiplied by the total number of the voltage dividing resistors.

The monitoring device obtains the identification number of the module through the fourth result value plus the serial number of the slot.

In operation 303, the monitoring device sends the obtained identification information to the module.

In the method for obtaining a module identifier provided in the embodiment of the present disclosure, the monitoring device obtains the rack information and the slot information from the module, and then obtains the identification information of the module according to the obtained two pieces of information and sends the identification information to the module, so that the module obtains the identification information, thereby conveniently and quickly achieving identification to the modules, with avoiding a series of problems such as costing a great deal of labor and materials, being subject to the number of PCI parallel buses and being of poor identification efficiency.

An embodiment of the present disclosure further provides a module, which is inserted to a single board. As shown in FIG. 4, the module 4 includes a first obtaining unit 41 and a first processing unit 42.

The first acquiring unit 41 is configured to obtain a signal including rack information and a signal including slot information from the single board to which the module is inserted.

The first processing unit 42 is configured to obtain identification information of the module by using the rack information and the slot information.

In an exemplary example, the first acquiring unit 41 is specifically configured to obtain the signal including the rack information and the signal including the slot information through analog-to-digital conversion sampling from the single board to which the module is inserted.

In an exemplary example, the first acquiring unit 41 is specifically configured to obtain the signal including the rack information and the signal including the slot information through a communication bus from the single board to which the module is inserted.

In an exemplary example, the first processing unit 42 is specifically configured to send the rack information and the slot information to a monitoring device to enable the monitoring device to obtain the identification information of the module according to the rack information and the slot information; and receive the identification information from the monitoring device.

In an exemplary example, the identification information includes an identification number, the rack information includes a voltage value of a rack where the module is located, and the slot information includes a voltage value of a slot at the rack and in which the module is located. The first processing unit 42 is specifically configured to obtain a serial number of the rack where the module is located according to the voltage value of the rack, a voltage value of a power supply, and a total number of racks; obtain a serial number of the slot in which the module is located according to the voltage value of the slot, the voltage value of the power supply, and a total number of voltage dividing resistors; and obtain an identification number of the module according to the serial numbers of the rack and the slot, and the total number of the voltage dividing resistors.

In an exemplary example, the first processing unit 42 is specifically configured to obtain the serial number of the rack where the module is located through the voltage value of the rack divided by the voltage value of the power supply and further multiplied by the total number of the racks; obtain the serial number of the slot in which the module is located through the voltage value of the slot divided by the voltage value of the power supply and further multiplied by the total number of the voltage dividing resistors; obtain a first result value through the serial number of the rack minus 1; obtain a second result value through the first result value multiplied by the total number of the voltage dividing resistors; and obtain the identification number of the module through the second result value plus the serial number of the slot.

The module provided in the embodiment of the present disclosure obtains the signal including the rack information and the signal including the slot information from the single board to which the module is inserted, and then obtains the identification information of the module by using the obtained two pieces of information, thereby conveniently and quickly achieving identification to the modules, with avoiding a series of problems such as costing a great deal of labor and materials, being subject to the number of PCI parallel buses and being of poor identification efficiency.

In practical application, the first acquisition unit 41 and the first processing unit 42 are implemented in a central processing unit (CPU), a micro processor unit (MPU), a digital signal processor (DSP), a field programmable gate array (FPGA) or the like in the module.

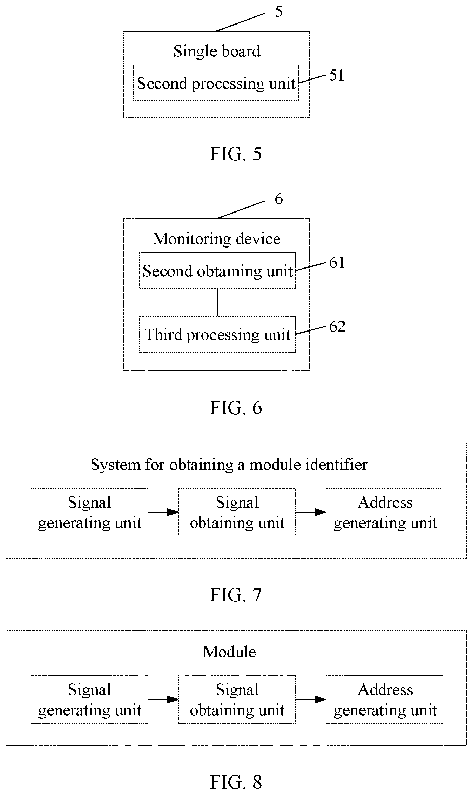

An embodiment of the present disclosure further provides a single board. As shown in FIG. 5, the single board 5 includes a second processing unit 51.

The second processing unit 51 is configured to generate a signal including rack information and a signal including slot information according to a rack and a slot in which each module inserted to the single board is located.

In an exemplary example, the second processing unit 51 is specifically configured to generate the signal including the rack information and the signal including the slot information through a resistor divider network according to the rack and the slot in which the module inserted to the single board is located.

In an exemplary example, the second processing unit 51 generates the signal including the rack information through an external signal-generating device according to the rack in which the module inserted to the single board is located, and generates the signal including the slot information through a resistor divider network according to the slot in which the module inserted to the single board is located.

In an exemplary example, the external signal generation device includes a controller area network relay and a monitoring device.

The single board provided in the embodiment of the present disclosure generates the signal including the rack information and the signal including the slot information according to the rack and the slot in which the module inserted to the single board is located, so as to enable the module to obtain the signal including the rack information and the signal including the slot information and then obtain the identification information of the module according to the obtained two pieces of information, thereby conveniently and quickly achieving identification to the modules, with avoiding a series of problems such as costing a great deal of labor and materials, being subject to the number of PCI parallel buses and being of poor identification efficiency.

In practical application, the second processing unit 51 is implemented in a CPU, an MPU, a DSP, an FPGA or the like in the single board.

An embodiment of the present disclosure further provides a monitoring device. As shown in FIG. 6, the monitoring device 6 includes a second obtaining unit 61 and a third processing unit 62.

The second obtaining unit 61 is configured to obtain rack information and slot information from a module.

The third processing unit 62 is configured to obtain identification information of the module according to the rack information and the slot information, and send the obtained identification information to the module.

In an exemplary example, the identification information includes an identification number, the rack information includes a voltage value of a rack where the module is located, and the slot information includes a voltage value of a slot at the rack and in which the module is located.

In an exemplary example, the third processing unit 62 is specifically configured to obtain a serial number of the rack where the module is located according to the voltage value of the rack, a voltage value of a power supply, and a total number of racks; obtain a serial number of the slot in which the module is located according to the voltage value of the slot, the voltage value of the power supply, and a total number of voltage dividing resistors; and obtain an identification number of the module according to the serial numbers of the rack and the slot, and the total number of the voltage dividing resistors.

In an exemplary example, the third processing unit 62 is specifically configured to obtain the serial number of the rack where the module is located through the voltage value of the rack divided by the voltage value of the power supply and further multiplied by the total number of the racks; obtain the serial number of the slot in which the module is located through the voltage value of the slot divided by the voltage value of the power supply and further multiplied by the total number of the voltage dividing resistors; obtain a third result value through the serial number of the rack minus 1; obtain a fourth result value through the third result value multiplied by the total number of the voltage dividing resistors; and obtain the identification number of the module through the fourth result value plus the serial number of the slot.

The monitoring device provided in the embodiment of the present disclosure obtains the rack information and the slot information from the module, and then obtains the identification information of the module according to the obtained two pieces of information and sends the identification information to the module, so that the module obtains the identification information, thereby conveniently and quickly achieving identification to the modules, with avoiding a series of problems such as costing a great deal of labor and materials, being subject to the number of PCI parallel buses and being of poor identification efficiency.

In practical application, the second obtaining unit 61 and the third processing unit 62 are implemented in a CPU, an MPU, a DSP, an FPGA or the like, in a monitoring device.

An embodiment of the present disclosure further provides a system for obtaining a module identifier, including a board as described above and a plurality of the modules as described above.

An embodiment of the present disclosure further provides a system for obtaining a module identifier, including a board as described above, a monitoring device as described above and a plurality of modules as described above.

An embodiment of the present disclosure further provides a system for obtaining a module identifier, as shown in FIG. 7, including a signal generating unit, a signal obtaining unit and an address generating unit.

The signal generating unit is configured to generate signals including rack information, slot information and the like by means of, but not limited to, a resistor divider network, or a signal-generating unit of an external device such as a CAN relay or a monitoring device.

The signal obtaining unit is configured to obtain the signals generated by the signal generating unit by means of, but not limited to, analog-to-digital conversion sampling, or a communication bus.

The address generating unit is configured to obtain address numbers of modules by processing information such as voltages of racks and voltages of slots obtained by the signal obtaining unit, which may be implemented in, but not limited to, the following manners.

The modules automatically contend for address numbers, that is, the address numbers of the modules are obtained by comparing and sorting the obtained rack information and slot information between the modules.

The monitoring unit uniformly allocates address numbers, that is, the monitoring unit processes the information reported by the modules and sends the allocated address numbers to the modules.

The modules obtain address numbers through an algorithm, that is, each module obtains an address number through calculation of the rack information and the slot information, without information interaction with other modules and the monitoring unit.

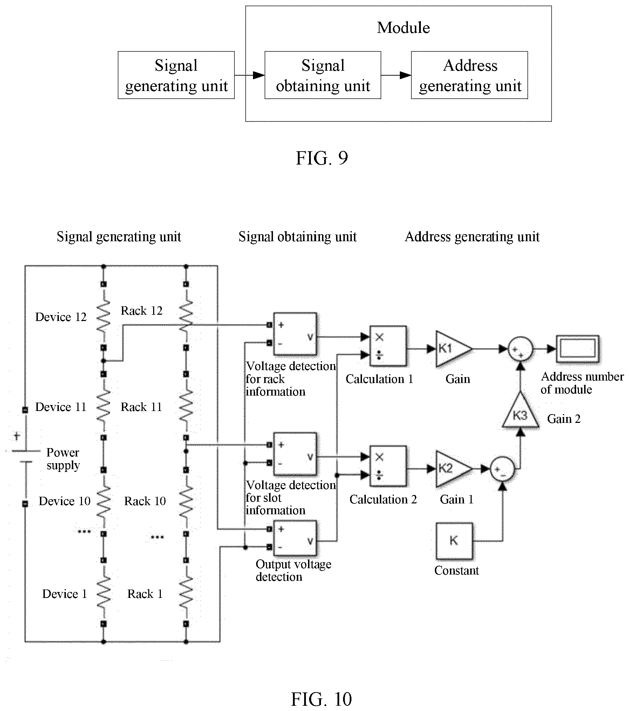

The signal obtaining unit and the address generating unit in the system for obtaining a module identifier provided in the embodiment of the present disclosure are located in the module. The signal generation unit may be located in the module, as shown in FIG. 8, or may be located outside the module, as shown in FIG. 9.

The method corresponding to the system for obtaining a module identifier provided in the embodiment of the present disclosure includes operations as follows.

In operation 1, the signal generating unit generates signals including rack information, slot information and the like. The signal generating unit includes, but is not limited to, a resistor divider network, or an external device, or the like.

In operation 2, the signal obtaining unit obtains the signals generated by the signal generating unit, by means of, but not limited to, analog-to-digital conversion sampling, a communication bus, or the like.

In operation 3, the address generating unit obtains address numbers of the modules by processing information such as voltages of racks and voltages of slots obtained by the signal obtaining unit, which may be implemented in, but not limited to, a manner of automatic contention for address numbers between the modules, uniform allocation of address numbers by the monitoring unit, obtaining address numbers through an algorithm by the modules, or the like.

An embodiment of the present disclosure further provides a system for obtaining a module identifier, as shown in FIG. 10.

A signal generating unit includes a resistor divider network, and a signal obtaining unit performs sampling at two analog-to-digital conversion ports of the module in a working mode of analog-to-digital conversion. The rack information (specifically a detected voltage for grouping information of serial numbers of racks) and the slot information (specifically a detected voltage for slot voltage information) are obtained through sampling by the two resistor divider networks, and a slot address of the detected module is obtained through address algorithm processing.

In an address algorithm, where M represents the number of racks, N represents the number of voltage dividing resistors; Vout represents a detected output voltage; Vrack represents a detected voltage for grouping information of serial numbers of racks; Vid represents a detected voltage for slot voltage information;

$$\text{Address number} = (\text{Vrack}/\text{Vout} * M - 1) * N + \text{Vid}/\text{Vout} * N;$$

$$\text{Maximum address number} = M * N.$$

The address numbers are in an order of module numbers on the rack. For example, the number of racks in the system is 12, the number of voltage dividing resistors is 12, a certain module is located at a rack with a serial number of 2 and has a module number of 7, the address number of the module is calculated as (2-1)*12+7=19, and the maximum number in the system is 144.

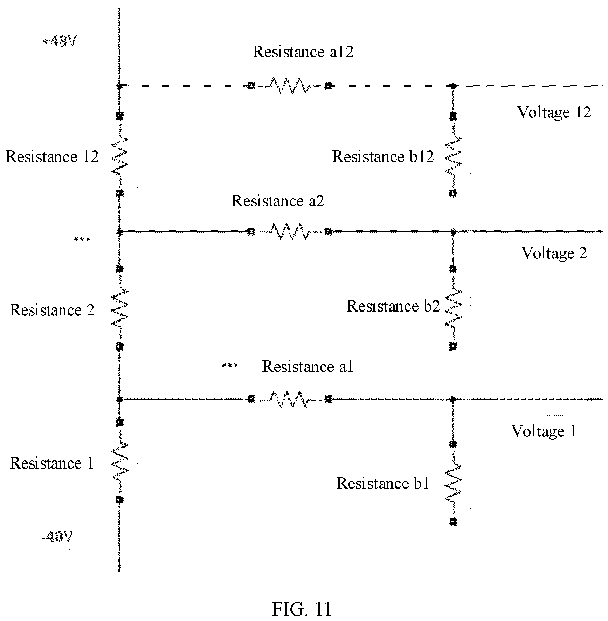

A circuit including twelve node circuits are set up, as shown in FIG. 11, where R1=...=R11=R12, Ra1=...=Ra11=Ra12, and Rb1=...=Rb11=Rb12. In order to prevent resistance such as Ra1 from affecting voltage division of R1 and ...R12, it is necessary to ensure that the relationship of Ra1 and R1 is determined. The effect of Ra1 on R1 can be ignored by calculating when Ra1 >= 1000R1. A maximum error of theoretical analysis is 1.93%.

After calculation, R1 is selected as 1000 ohms, with an accuracy of 1%; Ra1 is selected a 1M ohms, with an accuracy of 0.5%; Rb1 is selected as 51.1 kilo-ohms, with an accuracy of 1%. The slot address information can be estimated in turn by using sampled values, busbar voltage values and ideal voltage dividing ratios of the resistance. The estimated slot address information has a maximum error is 2.61% compared with the theoretical value. Verification is performed on sampling information of the twelve nodes to ensure greater tolerance for samples of the twelve nodes without causing misjudgment. During actual test, the node information estimated by sampling voltage signals is compared with the real serial number of the slot, and the estimated slot code can reflect the real slot address. This scheme is applicable to a case with multiple racks and multiple modules.

The method for automatic allocation of addresses to multiple racks and multiple modules described in this solution includes operations as follows.

In operation 1, signals including rack information and slot information are generated by the resistor divider network which serves as a signal generating unit, and then sent to the signal obtaining unit.

In operation 2, the signal obtaining unit performs sampling at the two analog-to-digital conversion ports of the module in the working mode of analog-to-digital conversion to obtain the rack information and the slot information.

In operation 3, the address generating unit performs algorithm and combination on the rack information and the slot information obtained by the signal obtaining unit to obtain an address number of the module.

According to different hardware structures, the input source of the signal generating unit may be inside the module or outside the module. Adjacent racks may extend the rack number address through the backplane therebetween. The input source of the resistor divider network may be one of DC voltage source, DC current source, and the voltage output of the module itself. The signal generating unit and the signal obtaining unit may be combined in a coupling or non-coupling manner. The specific forms include the following three cases.

In a first case, the input source of the resistor divider network is DC voltage source.

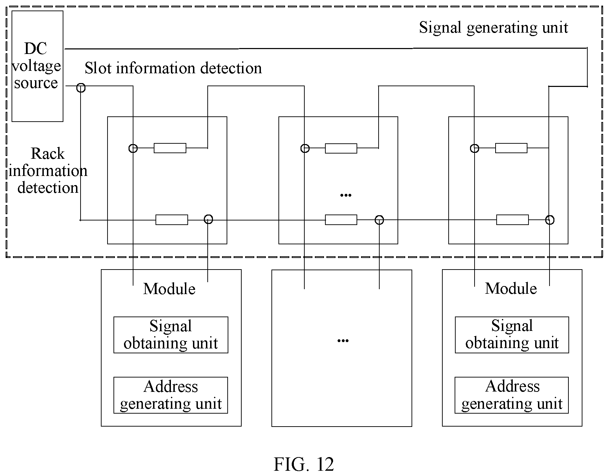

The signal generating unit and the signal obtaining unit may be combined in a non-coupling manner, and the input source of the signal generating unit is outside the module, as shown in FIG. 12.

In a second case, the input source of the resistor divider network is DC current source.

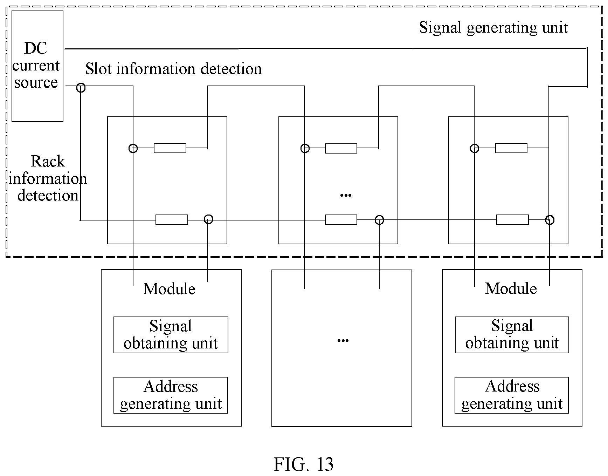

The signal generating unit and the signal obtaining unit may be combined in a non-coupling manner, and the input source of the signal generating unit is outside the module, as shown in FIG. 13.

In a third case, the input source of the resistor divider network is the output of the module itself.

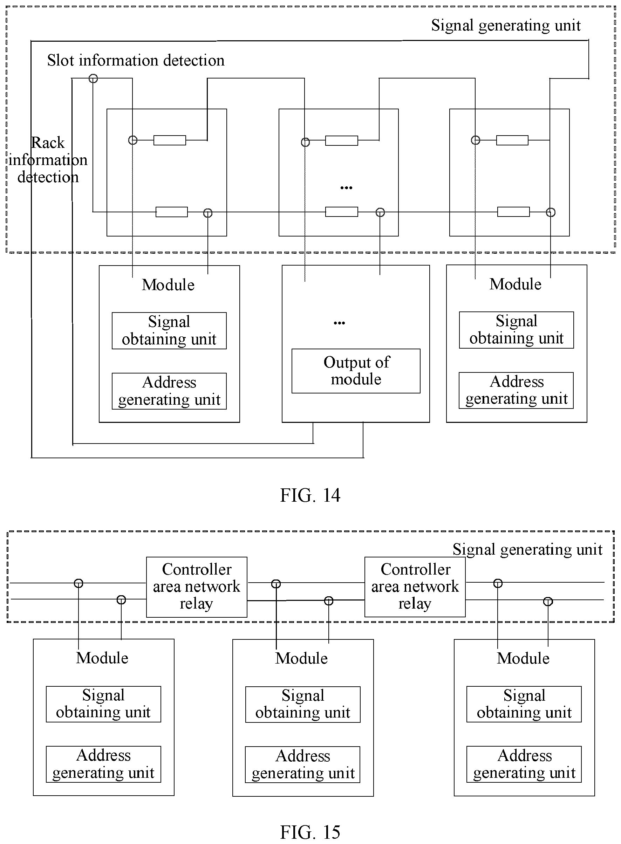

The signal generating unit and the signal obtaining unit are combined in a coupling manner, and the input source of the signal generating unit is inside the module, as shown in FIG. 14.

The system and method for obtaining a module identifier provided by the embodiments of the present disclosure have advantages as follows.

1. The address generating unit generates the address number of the module by itself, and no external monitoring is required for address allocation, so that the DIP device and related hardware circuits for determination of the module address are omitted, and no cumbersome manual setting for address is required, thereby improving the reliability and providing convenience to configuration and maintenance for the system.

2. The address algorithm is independent of the resistance value of the resistor divider, which is convenient for hardware adjustment.

3. After the number N of voltage dividing resistors is fixed, the algorithm is applicable and compatible to various configurations of racks.

Exception handling: in any case where the modules with a same address number report only group addresses and intra-group addresses, the monitoring judges according to the group addresses and the intra-group addresses reported by the modules.

An embodiment of the present disclosure further provides a system for obtaining a module identifier, as shown in FIG. 15.

The method for automatic allocation of addresses to multiple racks and multiple modules described in this solution includes operations as follows.

In operation 1, signals including rack information and slot information are generated by the CAN relay which serves as a signal generating unit, and then sent to the signal obtaining unit.

In operation 2, the CAN relay further serves as a signal obtaining unit to process the signals generated by the signal generating unit to obtain the rack information and the slot information.

In operation 3, the address generating unit performs algorithm and combination on the rack information and the slot information obtained by the signal obtaining unit to obtain an address number of the module.

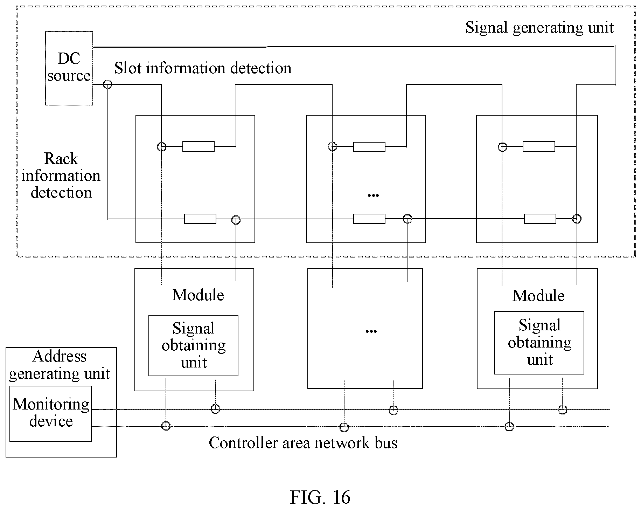

An embodiment of the present disclosure further provides a system for obtaining a module identifier, as shown in FIG. 16.

The method for automatic allocation of addresses to multiple racks and multiple modules described in this solution includes operations as follows.

In operation 1, signals including rack information and slot information are generated by the resistor divider network which serves as a signal generating unit.

In operation 2, the signal obtaining unit performs sampling at the two analog-to-digital conversion ports of the module in the working mode of analog-to-digital conversion, obtains the rack information and the slot information in a CAN communication manner, and sends the collected information to an address generating unit.

In operation 3, the monitoring unit serves as the address generating unit to process the rack information and the slot information obtained by the signal obtaining unit to obtain module address numbers which are allocated to the corresponding modules through a CAN bus.

A formula for calculating the address number of the module is used when the software in the monitoring unit processes the rack information and the slot information obtained by the signal obtaining unit. The formula is as follows.

The address number of the module is obtained by $Sn=(m-1)*N+n$, where m represents a serial number of a rack where the module is located, n represents a serial number of a slot in which the module is located, and N is the number of voltage dividing resistors.

The serial number m of the rack can be obtained when $SN_1 + SN_2 + ... + SN_{m-1} < Sn$, $SN_1 + SN_2 + ... + SN_m > Sn$.

The serial number n of the slot is obtained by $n = Sn - (SN_1 + SN_2 + ... + SN_{m-1})$.

Although the embodiments in the present disclosure are described above, the described embodiments are merely for convenience of understanding of the present disclosure, but not intended to limit the present disclosure. Those skilled in the art may make any modifications and changes in the form and details of the implementation without departing from the spirit and scope disclosed in the embodiments of the present disclosure. The protection scope of the present disclosure shall be subject to the scope defined in the appended claims.

## Claims

1. A method for obtaining a module identifier, comprising:

   obtaining, by a module, a signal including rack information and a signal including slot information from a single board to which the module is inserted; and
   obtaining, by the module, identification information of the module by using the rack information and the slot information.

2. The method according to claim 1, wherein obtaining, by the module, the signal including the rack information and the signal including the slot information from the single board to which the module is inserted comprises:

   obtaining, by the module, the signal including the rack information and the signal including the slot information through analog-to-digital conversion sampling from the single board to which the module is inserted; or
   obtaining, by the module, the signal including the rack information and the signal including the slot information through a communication bus from the single board to which the module is inserted.

3. The method according to claim 1, wherein obtaining, by the module, the identification information of the module by using the rack information and the slot information comprises:

   sending, the module, the rack information and the slot information to a monitoring device to enable the monitoring device to obtain the identification information of the module according to the rack information and the slot information; and
   receiving, by the module, the identification information from the monitoring device.

4. The method according to claim 1, wherein the identification information comprises an identification number, the rack information comprises a voltage value of a rack where the module is located, and the slot information comprises a voltage value of a slot at the rack and in which the module is located, and wherein obtaining, by the module, the identification information of the module by using the rack information and the slot information comprises:

   obtaining, by the module, a serial number of the rack where the module is located according to the voltage value of the rack, a voltage value of a power supply, and a total number of racks;
   obtaining, by the module, a serial number of the slot in which the module is located according to the voltage value of the slot, the voltage value of the power supply, and a total number of voltage dividing resistors; and
   obtaining, by the module, an identification number of the module according to the serial numbers of the rack and the slot, and the total number of the voltage dividing resistors.

5. The method according to claim 4, wherein obtaining, by the module, the serial number of the rack where the module is located according to the voltage value of the rack, the voltage value of the power supply, and the total number of the racks comprises:

   obtaining, by the module, the serial number of the rack where the module is located through the voltage value of the rack divided by the voltage value of the power supply and further multiplied by the total number of the racks; and

   wherein obtaining, by the module, the serial number of the slot in which the module is located according to the voltage value of the slot, the voltage value of the power supply, and the total number of the voltage dividing resistors comprises:

obtaining, by the module, the serial number of the slot in which the module is located through the voltage value of the slot divided by the voltage value of the power supply and further multiplied by the total number of the voltage dividing resistors; and

wherein obtaining, by the module, the identification number of the module according to the serial numbers of the rack and the slot, and the total number of the voltage dividing resistors comprises:

obtaining, by the module, a first result value through the serial number of the rack minus 1;
obtaining, by the module, a second result value through the first result value multiplied by the total number of the voltage dividing resistors; and
obtaining, by the module, the identification number of the module through the second result value plus the serial number of the slot.

6. A method for obtaining a module identifier, comprising:
generating, by a single board, a signal including rack information and a signal including slot information according to a rack and a slot in which a module inserted to the single board is located.

7. The method according to claim 6, wherein generating, by the single board, the signal including the rack information and the signal including the slot information according to the rack and the slot in which the module inserted to the single board is located comprises:

generating, by the single board, the signal including the rack information and the signal including the slot information through a resistor divider network according to the rack and the slot in which the module inserted to the single board is located; or
generating, by the single board, the signal including the rack information through an external signal-generating device according to the rack in which the module inserted to the single board is located, and generating, by the single board, the signal including the slot information through a resistor divider network according to the slot in which the module inserted to the single board is located.

8. The method according to claim 7, wherein the external signal-generating device comprises a controller area network relay and a monitoring device.

9. A method for obtaining a module identifier, comprising:

obtaining, by a monitoring device, rack information and slot information from a module;
obtaining, by the monitoring device, identification information of the module according to the rack information and the slot information; and
sending, by the monitoring device, the identification information to the module.

10. The method according to claim 9, wherein the identification information comprises an identification number, the rack information comprises a voltage value of a rack where the module is located, the slot information comprises a voltage value of a slot at the rack and in which the module is located, and wherein obtaining, by the monitoring device, the identification information of the module according to the rack information and the slot information comprises:

obtaining, by the monitoring device, a serial number of the rack where the module is located according to the voltage value of the rack, a voltage value of a power supply, and a total number of racks;
obtaining, by the monitoring device, a serial number of the slot in which the module is located according to the voltage value of the slot, the voltage value of the power supply, and a total number of voltage dividing resistors; and
obtaining, by the monitoring device, an identification number of the module according to the serial numbers of the rack and the slot, and the total number of the voltage dividing resistors.

11. The method according to claim 10, wherein obtaining, by the monitoring device, the serial number of the rack where the module is located according to the voltage value of the rack, the voltage value of the power supply, and the total number of the racks comprises:

obtaining, by the monitoring device, the serial number of the rack where the module is located through the voltage value of the rack divided by the voltage value of the power supply and further multiplied by the total number of the racks; and

wherein obtaining, by the monitoring device, the serial number of the slot in which the module is located according to the voltage value of the slot, the voltage value of the power supply, and the total number of the voltage dividing resistors comprises:

obtaining, by the monitoring device, the serial number of the slot in which the module is located through the voltage value of the slot divided by the voltage value of the power supply and further multiplied by the total number of the voltage dividing resistors; and

wherein obtaining, by the monitoring device, the identification number of the module according to the serial numbers of the rack and the slot, and the total number of the voltage dividing resistors comprises:

obtaining, by the monitoring device, a third result value through the serial number of the rack minus 1;
obtaining, by the monitoring device, a fourth result value through the third result value multiplied by the total number of the voltage dividing resistors; and
obtaining, by the monitoring device, the identification number of the module through the fourth result value plus the serial number of the slot.

12. A module inserted to a single board, the module comprising:

a first obtaining unit configured to obtain a signal including rack information and a signal including slot information from the single board to which the module is inserted; and
a first processing unit configured to obtain identification information of the module by using the rack information and the slot information.

13. A single board with a plurality of modules inserted thereto, the single board comprising:
a second processing unit configured to generate a signal including rack information and a signal including slot information according to a rack and a slot in which each module inserted to the single board is located.

14. A monitoring device comprising:

a second obtaining unit configured to obtain rack information and slot information from a module; and
a third processing unit configured to obtain identification information of the module according to the rack information and the slot information, and send the obtained identification information to the module.

15. A system for obtaining a module identifier, comprising a single board according to claim 13 and a plurality of modules according to claim 12.

16. A system for obtaining a module identifier, comprising a single board according to claim 13, a monitoring device according to claim 14, and a plurality of modules according to claim 12.

101

The module obtains a signal including rack information and a signal including slot information from a single board to which the module is inserted

102

The module obtains identification information of the module by using the rack information and the slot information

FIG. 1

201

The single board generates a signal including rack information and a signal including slot information according to a rack and a slot in which a module inserted to the single board is located

FIG. 2

301

The monitoring device obtains rack information and slot information from a module

302

The monitoring device obtains identification information of the module according to the rack information and the slot information

303

The monitoring device sends the identification information to the module

FIG. 3

4

Module

First obtaining unit — 41

First processing unit — 42

FIG. 4

5

Single board

| Second processing unit | ─51

FIG. 5

6

Monitoring device

| Second obtaining unit | ─61

| Third processing unit | ─62

FIG. 6

System for obtaining a module identifier

| Signal generating unit | → | Signal obtaining unit | → | Address generating unit |

FIG. 7

Module

| Signal generating unit | → | Signal obtaining unit | → | Address generating unit |

FIG. 8

FIG. 9

FIG. 10

+48V

Resistance a12

Voltage 12

Resistance 12

Resistance b12

Resistance a2

Voltage 2

Resistance 2

Resistance b2

···        Resistance a1

Voltage 1

Resistance 1

Resistance b1

-48V

FIG. 11

FIG. 12

FIG. 13

Signal generating unit

Slot information detection

Rack information detection

Module

Signal obtaining unit

Address generating unit

...

Output of module

Module

Signal obtaining unit

Address generating unit

FIG. 14

Signal generating unit

Controller area network relay

Controller area network relay

Module

Signal obtaining unit

Address generating unit

Module

Signal obtaining unit

Address generating unit

Module

Signal obtaining unit

Address generating unit

FIG. 15

FIG. 16

## INTERNATIONAL SEARCH REPORT

| International application No. |
|---|
| **PCT/CN2020/087077** |

**A. CLASSIFICATION OF SUBJECT MATTER**

G06F 13/40(2006.01)i; G06F 13/42(2006.01)i

According to International Patent Classification (IPC) or to both national classification and IPC

**B. FIELDS SEARCHED**

Minimum documentation searched (classification system followed by classification symbols)

G06F; H04L

Documentation searched other than minimum documentation to the extent that such documents are included in the fields searched

Electronic data base consulted during the international search (name of data base and, where practicable, search terms used)

CNPAT; WPI; EPODOC; CNKI; IEEE: 单板, 板卡, 背板, 槽位, 电源, 电压, 标识号, 地址, single, board, back, plane, slot, power, voltage, identification, address

**C. DOCUMENTS CONSIDERED TO BE RELEVANT**

| Category* | Citation of document, with indication, where appropriate, of the relevant passages | Relevant to claim No. |
|---|---|---|
| PX | CN 110362522 A (ZTE CORPORATION) 22 October 2019 (2019-10-22) claims 1-16 | 1-16 |
| X | CN 103442095 A (COMBA TELECOM SYSTEMS (CHINA) CO., LTD.) 11 December 2013 (2013-12-11) description, paragraphs [0034]-[0082] | 1-3, 6, 9, 12-16 |
| A | CN 109495164 A (LUSTER TIANBO OPTOELECTRONIC TECHNOLOGY CO., LTD.) 19 March 2019 (2019-03-19) entire document | 1-16 |
| A | CN 101097563 A (ZTE CORPORATION) 02 January 2008 (2008-01-02) entire document | 1-16 |
| A | US 6356966 B1 (APW LTD.) 12 March 2002 (2002-03-12) entire document | 1-16 |

☐ Further documents are listed in the continuation of Box C.　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 July 2020** | **24 July 2020** |

| Name and mailing address of the ISA/CN | Authorized officer |
|---|---|
| **China National Intellectual Property Administration (ISA/CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/087077**

| Patent document cited in search report | | | Publication date (day/month/year) | Patent family member(s) | Publication date (day/month/year) |
|---|---|---|---|---|---|
| CN | 110362522 | A | 22 October 2019 | None | |
| CN | 103442095 | A | 11 December 2013 | None | |
| CN | 109495164 | A | 19 March 2019 | None | |
| CN | 101097563 | A | 02 January 2008 | None | |
| US | 6356966 | B1 | 12 March 2002 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910468278